# EUROPÄISCHE PATENTANMELDUNG

(11) **EP 1 967 615 A1**
(43) Veröffentlichungstag der Anmeldung: **10.09.2008**
(21) Anmeldenummer: 07004690.9
(22) Anmeldetag: 07.03.2007
(51) Int. Cl.: C25D 11/02, C25D 11/04, C25D 11/12, C25D 11/26, C25D 5/28

(54) **Verfahren zum Aufbringen einer Wärmedämmbeschichtung und Turbinenbauteile mit einer Wärmedämmbeschichtung**

(71) Anmelder: SIEMENS AKTIENGESELLSCHAFT, 80333 München (DE)
(72) Erfinder: Lampenscherf, Stefan, 85586 Poing (DE); Stamm, Werner, 45481 Mülheim an der Ruhr (DE)

(57) **Zusammenfassung**

Es wird ein Verfahren zum Aufbringen eines Wärmedämmbeschichtungssystems mit wenigstens einer oxidkeramischen Beschichtung (19) auf einem Turbinenbauteil (120, 130) oder einer auf dem Turbinenbauteil (120, 130) aufgebrachten Haftvermittlerschicht (13) zur Verfügung gestellt. Die oxidkeramische Beschichtung (19) wird zumindest teilweise durch elektrolytische Oxidation auf das Turbinenbauteil (120, 130) bzw. die Haftvermittlerschicht (13) aufgebracht.

## Beschreibung

Die vorliegende Erfindung betrifft ein Verfahren zum Aufbringen einer oxidkeramischen Wärmedämmbeschichtung auf einem Turbinenbauteil sowie ein mit einer oxidkeramischen Wärmedämmbeschichtung beschichtetes Turbinenbauteil.

Auf dem Weg zu einer ressourcen- und umweltschonenden Energieerzeugung spielt die Effizienzsteigerung von Kraftwerken eine zentrale Rolle. Einen hohen Wirkungsgrad weisen insbesondere Gas- und Dampfturbinenkraftwerke, oftmals "GuD-Kraftwerke" genannt, auf. Im Rahmen der Effizienzsteigerung ist es dennoch wünschenswert, den Wirkungsgrad von Gasturbinenkraftwerken und kombinierten Gas- und Dampfturbinenkraftwerken weiter zu erhöhen. Um dieses Ziel zu erreichen, ist man insbesondere bestrebt, die Effizienz der Gasturbinen zu steigern. Ein entscheidender Parameter für die Effizienzsteigerung von Gasturbinen ist die Turbineneintrittstemperatur. Mit einer Turbineneintrittstemperatur von 1.230°C (ISO) kann derzeit ein Gasturbinenwirkungsgrad von ca. 38% erreicht werden. Eine Effektivitätssteigerung der Gasturbine würde eine Erhöhung der Turbineneintrittstemperatur mit sich bringen. Bei einer Effizienzsteigerung auf beispielsweise 45% wäre eine deutlich höhere Turbineneintrittstemperatur von bis zu 1600°C notwendig.

Neben der Verwendung verbesserter Grundwerkstoffe und effektiver Kühlungsmethoden bilden keramische Wärmedämmschichten eine Schlüsseltechnologie, die derart hohe Turbineneintrittstemperaturen ermöglicht. Durch die thermisch isolierende Wirkung einer keramischen Wärmedämmschicht unter Beibehaltung gleicher Kühlungsbedingungen kann die Oberflächentemperatur an der Oberfläche der Wärmedämmschicht je nach Dicke der Wärmdämmschicht um einige hundert Kelvin gesteigert werden, ohne dass das Schaufelsubstrat unzulässig heiß werden würde.

Voraussetzung für den effizienten Einsatz von keramischen Wärmedämmschichten in Gasturbinen ist neben einer kostengünstigen Prozesstechnologie vor allem die strukturelle Stabilität und damit die Zuverlässigkeit der Wärmedämmbeschichtung unter den Einsatzbedingungen von Gasturbinen. So muss für Gasturbinen im Bereich von Kraftwerksanwendungen eine störungsfreie Funktion über 25.000 äquivalente Betriebsstunden, dem angestrebten Revisionsintervall, garantiert werden. Ein vorzeitiges Versagen der Wärmedämmschicht würde in der Folge zu Überhitzung des Grundwerkstoffes und möglicherweise zu Beschädigungen der Turbine führen. Die dadurch verursachten Betriebsausfall- und Instandsetzungskosten könnten erheblich sein und wurden letztlich den technologischen Nutzen der Wärmedämmschicht in Frage stellen.

Bei der industriellen Herstellung von Wärmedämmschichten für den Einsatz in Gasturbinen haben sich derzeit zwei Verfahren durchgesetzt. Die keramische Wärmedämmschicht wird dabei entweder durch so genanntes atmosphärisches Plasmaspritzen (APS) oder durch elektronenstrahlunterstützte physikalische Abscheidung aus der Dampfphase (EB-PVD Electron Beam Physical Vapour Deposition) auf eine metallische Haftvermittlerschicht aufgebracht. Die Haftvermittlerschicht besteht in der Regel aus einer mit Aluminium angereicherten temperaturstabilen Legierung, die im Verlauf der thermischen Belastung beim Betrieb das Aluminiumreservoir für die Bildung einer dichten Aluminiumoxidschicht darstellt. Diese thermisch aufgewachsene Oxidschicht stellt letztlich eine effiziente Sauerstoff-Diffusionsbarriere dar und schützt den Grundwerkstoff vor einem zerstörenden Oxidationsangriff. Gleichzeitig stellt die Spröde und durch hohe Eigenspannungen beaufschlagte thermisch aufgewachsene Oxidschicht aber auch ein mit fortschreitender Betriebszeit zunehmendes Risiko für das Versagen der Wärmedämmbeschichtung durch die Ausbreitung von Delaminationsrissen und letztlich das Abplatzen der Wärmeschicht entlang der Grenzfläche zwischen der Wärmedämmschicht und der Haftvermittlerschicht dar. Nach dem derzeitigen Stand des Wissens bestimmt letztlich die Bildung der dichten Oxidschicht und deren mechanische Wechselwirkung mit der Wärmedämmschicht und der Haftvermittlerschicht die Lebensdauer der Wärmedämmbeschichtung. Dies gilt trotz gewisser Unterschiede sowohl für Wärmedämmbeschichtungen die durch elektronenstrahlunterstützte physikalische Abscheidung aus der Dampfphase aufgebracht worden sind, als auch für solche, die durch atmosphärisches Plasmaspritzen aufgebracht worden sind.

Aufgabe der vorliegenden Erfindung ist es demgegenüber ein verbessertes Verfahren zum Herstellen von Wärmedämmbeschichtungssystemen, ein verbessertes Wärmedämmbeschichtungssystem sowie ein verbessertes Turbinenbauteil zur Verfügung zu stellen.

Diese Aufgabe wird durch ein Verfahren zum Aufbringen eines Wärmedämmbeschichtungssystems nach Anspruch 1 bzw. durch ein Wärmedämmbeschichtungssystem nach Anspruch 11 sowie durch ein Turbinenbauteil nach Anspruch 17 gelöst. Die abhängigen Ansprüche enthalten vorteilhafte Ausgestaltungen der Erfindung.

Im erfindungsgemäßen Verfahren zum Aufbringen eines Wärmedämmbeschichtungssystems mit wenigstens einer oxidkeramischen Beschichtung auf einem Turbinenbauteil oder einer auf dem Turbinenbauteil aufgebrachten Haftvermittlerschicht wird die oxidkeramische Beschichtung zumindest teilweise durch elektrolytische Oxidation auf das Turbinenbauteil, d.h. direkt auf das Substrat (Basismaterial) des Turbinenbauteils, bzw. auf die Haftvermittlerschicht aufgebracht.

Die mittels der elektrolytischen Oxidation aufgebrachte oxidkeramische Beschichtung weist gegenüber Beschichtungen, die mit atmosphärischen Plasmaspritzen (APS) oder mit Elektronenstrahl unterstützte physikalische Abscheidung aus der Dampfphase (EB-PVD, Electron Beam Physical Vapour Deposition) abgeschieden wurden, eine deutlich verbesserte Haftung auf dem Turbinenbauteil bzw. der Haftvermittlerschicht auf. Das Risiko einer Ablösung kann dadurch deutlich vermindert werden. Außerdem lassen sich durch die elektrolytische Oxidation oxidkeramische Schichten mit gezielt eingestellter Porosität und einer Dicke von bis zu ca. 200µm aufwachsen. Das gezielte Einstellen der Porosität umfasst hierbei sowohl das gezielt Einstellen der Porenanordnung als auch das gezielte Einstellen des Anteils der Poren an der Beschichtung. Zudem weisen die mittels elektrolytischer Oxidation aufgewachsenen Schichten meist auch einen amorphen Anteil auf, der zumindest zum Teil auch unter höheren Temperaturbelastungen stabilisiert werden kann. Die gezielte Einstellbarkeit der Porosität und der amorphen Anteile der Beschichtung ermöglichen es, die Wärmeleitfähigkeit eines Wärmedämmbeschichtungssystems stark zu reduzieren und seine Dehnungstoleranz zu steigern.

Das Einstellen der Porosität der aufzubringenden oxidkeramischen Beschichtung kann beispielsweise dadurch erfolgen, dass beim elektrolytischen Oxidieren ein äußeres elektrisches Feld angelegt wird, dessen Feldstärke größer als die Durchbruchsspannung der aufzubringenden oxidkeramischen Beschichtung ist. Durch den elektrischen Entladungsvorgang und die dabei aktivierten plasmachemischen Reaktionen wächst, je nach gewählten Prozessparametern, die oxidkeramische Beschichtung mit jeweils unterschiedlicher Schichtmorphologie (Porosität) und Kristallinität auf (teilamorph, nanokristallin). Die für bestimmte oxidkeramische Materialien und ihre Schichtmorphologie bzw. Kristallinität geeigneten Prozessparameter können durch Versuchsreihen mit dem entsprechenden Material ermittelt werden.

Das Aufbringen der oxidkeramischen Beschichtung kann insbesondere erfolgen, indem das Turbinenbauteil bzw. die Haftvermittlerschicht vor dem elektrolytischen Oxidieren mit einem metallischen Schichtreservoir beschichtet wird, dessen Metall beim elektrolytischen Oxidieren oxidiert wird. Das metallische Schichtreservoir kann beispielsweise Aluminium und/oder Zirkonium umfassen.

Mit dem erfindungsgemäßen Verfahren können insbesondere Aluminiumoxidschichten als oxidkeramische Beschichtungen hergestellt werden. Dies ermöglicht es, Wärmedämmbeschichtungssysteme herzustellen, in denen sich mittels elektrolytischer Oxidation aufgebrachte poröse Aluminiumoxidschichten auf thermisch gebildeten dichten (also nicht poröse) Aluminiumoxidschichten befinden. Thermisch gebildete dichte Aluminiumoxidschichten bilden sich bspw. im Betrieb eines Wärmedämmschichtungssystems. Sie können aber grundsätzlich auch gezielt hergestellt werden. Eine poröse Aluminiumoxidschicht, insbesondere wenn diese im Vergleich zur thermisch gebildeten dichten Oxidschicht relativ dick ist, hat den Vorteil, dass die dichte und spannungsreiche thermisch gebildete Aluminiumoxidschicht räumlich von der keramischen Wärmedämmschicht in einem Wärmedämmbeschichtungssystem durch die poröse Aluminiumoxidschicht getrennt werden kann. Dadurch ergibt sich eine deutlich reduzierte Schädigungswirkung der thermisch gebildeten Aluminiumoxidschicht, die unter betriebsbedingter thermischer Belastung unterhalb der porösen Aluminiumoxidschicht an der Grenze zur Haftvermittlerschicht wächst. Außerdem verbessert die relativ dicke und poröse Aluminiumoxidschicht durch ihre geringe Wärmeleitfähigkeit (ca. 1,5 Watt/mK) die thermische Isolationswirkung des Wärmedämmbeschichtungssystems.

Die Aluminiumoxidschicht kann insbesondere aufgebracht werden, indem das Turbinenbauteil vor dem elektrolytischen Oxidieren mit einer MCrAlX-Schicht oder einer PtAl-Schicht (Platinaluminidschicht) als einem aluminiumreichen Schichtreservoir beschichtet wird, dessen Aluminium beim elektrolytischen Oxidieren oxidiert wird. Hierbei steht MCrAlX für eine Legierungszusammensetzung, in der M für Eisen, Nickel oder Kobalt, Cr für Chrom, A1 für Aluminium und X für ein Aktivelement steht. Als Aktivelement kann beispielsweise Yttrium (Y) und/oder Silizium (Si) und/oder zumindest ein Element der seltenen Erden bzw. Hafnium (Hf) Verwendung finden. Solche Legierungen sind beispielsweise aus EP 0 486 489 B1, EP 0 786 017 B1, EP 0 412 397 B1 oder EP 1 306 454 A1 bekannt, die bezüglich der chemischen Zusammensetzung der MCrAlX-Legierung Teil dieser Offenbarung sein sollen. Die MCrAlX-Schicht oder die PtAl-Schicht kann insbesondere als Haftvermittlerschicht auf dem Turbinenbauteil aufgebracht sein.

In einer besonderen Ausgestaltung des erfindungsgemäßen Verfahrens umfasst das oxidkeramische Wärmedämmbeschichtungssystem wenigstens eine erste oxidkeramische Beschichtung und eine zweite oxidkeramische Beschichtung, wobei die zweite oxidkeramische Beschichtung durch elektrolytische Oxidation auf die erste oxidkeramische Beschichtung aufgebracht wird. Hierbei kann insbesondere die zweite oxidkeramische Beschichtung aufgebracht werden, indem die erste oxidkeramische Beschichtung vor dem elektrolytischen Oxidieren mit einem metallischen Schichtreservoir beschichtet wird. Das Metall des metallischen Schichtreservoirs wird dann beim elektrolytischen Oxidieren oxidiert. Das metallische Schichtreservoir für die zweite oxidkeramische Beschichtung kann insbesondere Aluminium und/oder Zirkonium umfassen.

Im Rahmen des erfindungsgemäßen Verfahrens können insbesondere sowohl die erste oxidkeramische Beschichtung als auch die zweite oxidkeramische Beschichtung durch elektrolytische Oxidation aufgebracht werden.

Das Aufbringen einer zweiten oxidkeramischen Beschichtung auf eine erste oxidkeramische Beschichtung ermöglicht es insbesondere Wärmedämmbeschichtungssysteme herzustellen, in denen eine oxidkeramische Wärmedämmschicht auf einer porösen Aluminiumoxidschicht aufgebracht ist. Die oxidkeramische Wärmedämmschicht kann hierbei beispielsweise eine Zirkoniumoxidschicht sein, die auch mit Yttriumoxid teilweise oder vollständig in ihrer Struktur stabilisiert sein kann. Ein derartiges Wärmedämmbeschichtungssystem bietet gegenüber herkömmlichen Wärmedämmbeschichtungssystemen eine verbesserte Haftung der oxidkeramischen Wärmedämmschicht an der Aluminiumoxidschicht sowie eine verbesserte thermische Isolationswirkung auf Grund der geringen Wärmeleitfähigkeit des porösen Aluminiumoxids. Zudem kann die zweite oxidkeramische Beschichtung ebenfalls porös erzeugt werden und einen amorphen Anteil besitzen.

Das erfindungsgemäße Verfahren kann eine optionale Wärmebehandlung zum Bilden einer dichten Oxidschicht umfassen, was das gezielte Herstellen der dichten Aluminiumoxidschicht ermöglicht.

Ein erfindungsgemäßes Wärmedämmbeschichtungssystem umfasst wenigstens eine erste oxidkeramische Beschichtung und eine zweite oxidkeramische Beschichtung, wobei die zweite oxidkeramische Beschichtung auf der ersten oxidkeramischen Beschichtung angeordnet ist. Die erste oxidkeramische Beschichtung umfasst hierbei eine an die zweite oxidkeramische Beschichtung angrenzende poröse Schicht.

Mittels der porösen Schicht der ersten oxidkeramischen Beschichtung kann die Haftung der zweiten oxidkeramischen Beschichtung verbessert werden und die Wärmeleitfähigkeit des Wärmedämmbeschichtungssystems verringert werden, wie dies weiter oben am Beispiel des Aluminiumoxids beschrieben worden ist.

Im erfindungsgemäßen Wärmedämmbeschichtungssystem kann die erste oxidkeramische Beschichtung neben der porösen Schicht auch eine dichte Schicht aufweisen, wobei sich die poröse Schicht dann zwischen der dichten Schicht und der zweiten oxidkeramischen Beschichtung befindet. Mit einem derartigen Beschichtungssystem lassen sich sowohl die Vorteile einer dichten oxidkeramischen Schicht, beispielsweise einer dichten thermisch aufgewachsenen Aluminiumoxidschicht, mit den beschriebenen Vorteilen der porösen Schicht, beispielsweise einer porösen Aluminiumoxidschicht, vereinigen. Als Vorteil der dichten Aluminiumoxidschicht sei hierbei beispielhaft ihre effiziente Wirkung als Sauerstoff-Diffusionsbarriere erwähnt.

Vorteilhafterweise weist die poröse Schicht im Wärmedämmbeschichtungssystem eine Schichtdicke im Bereich von 10 bis 200 µm auf. Insbesondere dicke Schichten sind hierbei in der Lage, Spannung in darunter liegenden Schichten, beispielsweise in einer thermisch aufgewachsenen dichten Aluminiumoxidschicht von der zweiten oxidkeramische Beschichtung fernzuhalten.

Die erste oxidkeramische Beschichtung des Wärmedämmbeschichtungssystems kann insbesondere eine Aluminiumoxidschicht sein, die zweite oxidkeramische Beschichtung insbesondere eine Zirkoniumoxidschicht (ZrO₂), die auch vollständig oder teilweise mit Yttriumoxid (Y₂O₃) stabilisiert sein kann. Zudem kann die erste oxidkeramische Beschichtung des Wärmedämmbeschichtungssystems direkt auf einem Substrat oder auf einer auf dem Substrat vorhandenen Haftvermittlerschicht, beispielsweise eine MCrA1X-Schicht oder eine PtAl-Schicht, aufgebracht sein.

Ein erfindungsgemäßes Turbinenbauteil ist mit einem erfindungsgemäßen Wärmedämmbeschichtungssystem versehen.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
- Figur 1: zeigt beispielhaft eine Gasturbine in einem Längsteilschnitt.
- Figur 2: zeigt in perspektivischer Ansicht eine Laufschaufel oder Leitschaufel einer Strömungsmaschine.
- Figur 3: zeigt eine Brennkammer einer Gasturbine.
- Figur 4: zeigt ein Ausführungsbeispiel für das erfindungsgemäße Wärmedämmbeschichtungssystem.
- Figuren 5 - 9: zeigen verschiedene Stadien des Herstellungsprozesses zum Herstellen des Wärmedämmbeschichtungssystems aus Figur 4.
- Figur 10: zeigt ein Beispiel für ein mit dem erfindungsgemäßen Verfahren hergestelltes Wärmedämmbeschichtungssystem.
- Figuren 11 - 13: zeigen verschiedene Stadien des Herstellungsprozesses zum Herstellen des Wärmedämmbeschichtungssystems aus Figur 10.
- Figur 14: zeigt schematisch eine Anordnung zum elektrolytischen Oxidieren eines Turbinenbauteils.

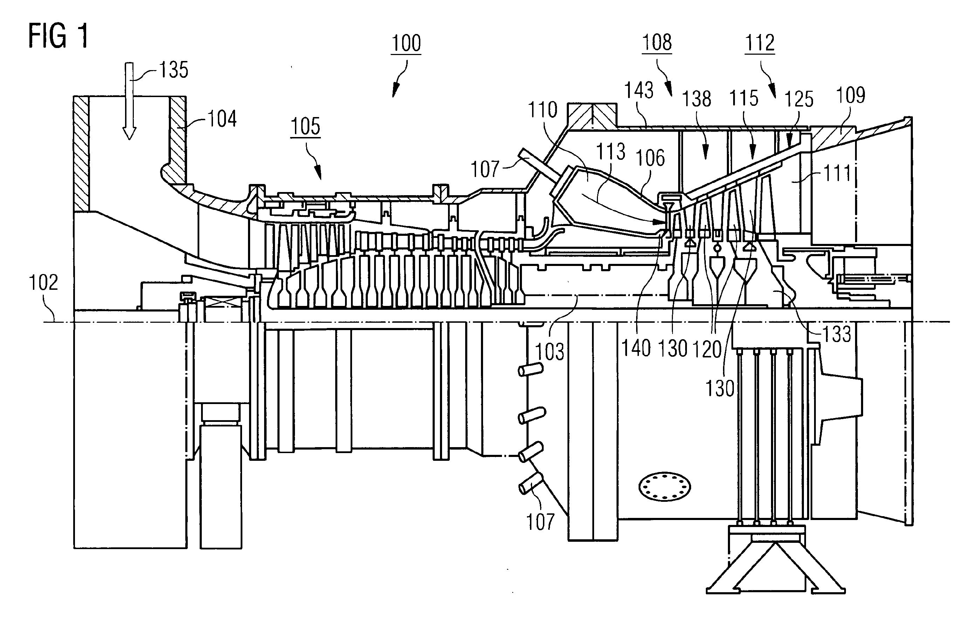

Die Figur 1 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.
Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden. Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die bzgl. der chemischen Zusammensetzung Teil dieser Offenbarung sein sollen.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

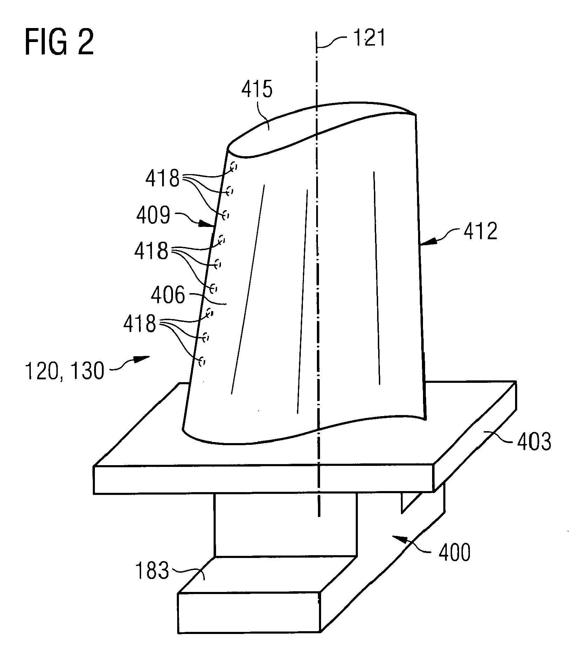

Die Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.
Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).
Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich. Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Die Dichte liegt vorzugsweise bei 95% der theoretischen Dichte.

Auf der MCrA1X-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8A1-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11A1-0,4Y-2Re oder Ni-25Co-17Cr-10A1-0,4Y-1,5Re.

Auf der MCrA1X kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

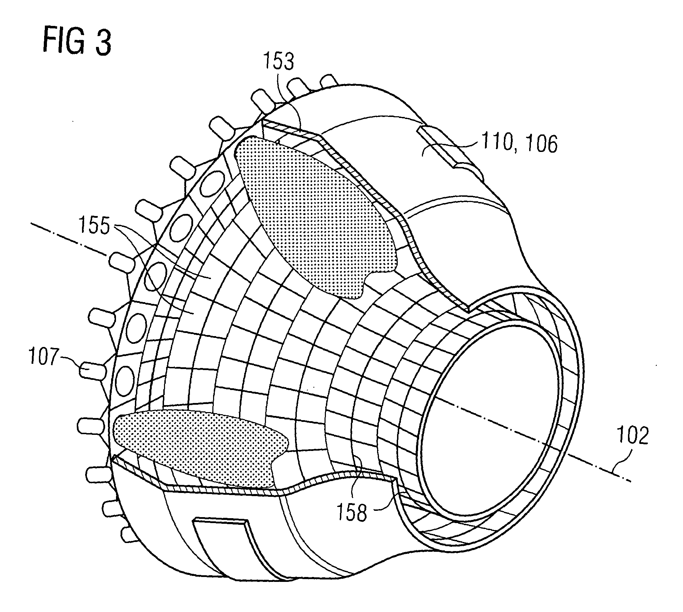

Die Figur 3 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrA1X-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

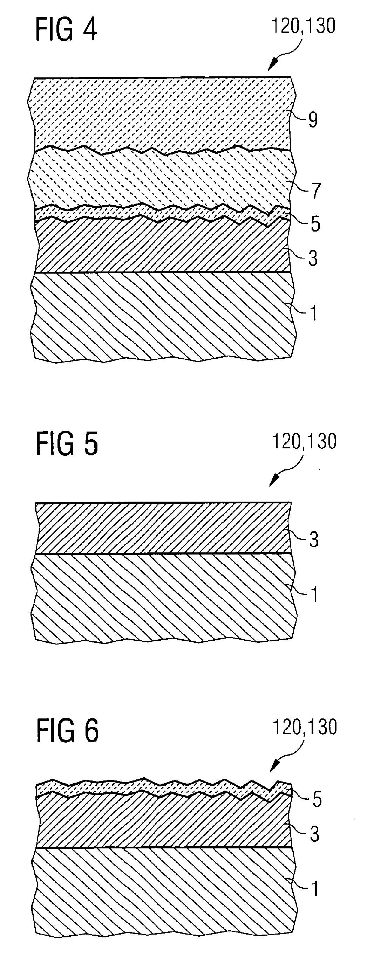

Ein Ausführungsbeispiel für das erfinddungsgemäße Wärmedämmbeschichtungssystem ist in Figur 4 dargestellt. Die Figur zeigt stark schematisiert einen Schnitt durch die Wand der Turbinenschaufel 120, 130 aus Figur 2, welche das Basismaterial 1 der Turbinenschaufel und das Wärmedämmbeschichtungssystem 3, 5, 7, 9 zeigt.

Das Wärmedämmbeschichtungssystem des Ausführungsbeispiels umfasst eine auf dem Basismaterial 1 aufgebrachte Haftvermittlerschicht 3, die im vorliegenden Ausführungsbeispiel eine MCrA1X-Schicht ist, eine thermisch gebildete dichte Aluminiumoxidschicht 5 auf der MCrA1X-Schicht 3, eine poröse Aluminiumoxidschicht 7 auf der dichten Aluminiumoxidschicht 5 sowie eine mit Yttriumoxid teilstabilisierte Zirkoniumoxidschicht 9 auf der porösen Aluminiumoxidschicht 7. Die poröse Aluminiumoxidschicht 7 weist im vorliegenden Ausführungsbeispiel eine Dicke von 150 bis 200 µm auf und besitzt einen amorphen Anteil, der insbesondere ca. 10 bis 50 % des Schichtvolumens betragen kann. Auf Grund der Porosität und der amorphen Materialanteile ist die Wärmeleitfähigkeit der porösen Aluminiumoxidschicht 7 gegenüber der dichten Aluminiumoxidschicht 5 erheblich reduziert. Außerdem ist die Dehnungstoleranz gegenüber der dichten Aluminiumoxidschicht 5 stark erhöht. Daher kann die poröse Aluminiumoxidschicht 7 als Puffer dienen, die Belastungen auf Grund der hohen Eigenspannung, die während des Betriebs einer Gasturbine in der dichten Aluminiumoxidschicht 5 entstehen können, von der Zirkoniumoxidschicht 9 weitgehend fernhält. Abplatzungen der Zirkoniumoxidschicht können damit zuverlässiger als bisher vermieden werden.

Außer der porösen Aluminiumoxidschicht 7 kann auch die Zirkoniumoxidschicht 9 eine Porosität aufweisen und zudem im gleichen Umfang wie die poröse Aluminiumoxidschicht 7 amorphe Materialanteile aufweisen.

In einer alternativen Ausführungsvariante des ersten Ausführungsbeispiels kann die MCrAlX-Schicht 3 durch eine Platinaluminidschicht oder eine andere aluminiumreiche Schicht ersetzt sein. Ebenso kann die poröse Aluminiumoxidschicht grundsätzlich auch direkt auf das Substrat (Basismaterial) 1 aufgebracht sein.

Das erfindungsgemäße Verfahren, mit dem sich das Wärmedämmbeschichtungssystem aus Figur 4 herstellen lässt wird nachfolgend mit Bezug auf die Figuren 5 bis 9 beschrieben. Die Figuren stellen das Beschichtungssystem in unterschiedlichen Stadien des Beschichtungsverfahrens dar.

Figur 5 stellt das Verfahren nach einem ersten Verfahrensschritt dar, in dem eine MCrAlX-Schicht 3 auf das Basismaterial 1 der Turbinenschaufel 120, 130 aufgebracht worden ist. Das Aufbringen der MCrAlX-Schicht 3 erfolgt im vorliegenden Ausführungsbeispiel mittels eines Standardprozesses, beispielsweise durch Plasmaspritzen. Die MCrAlX-Schicht 3 dient im Folgenden einerseits als Haftvermittlerschicht und andererseits als ein aluminiumreiches Schichtreservoir für die nachfolgenden Verfahrensschritte.

Nachdem die MCrAlX-Schicht 3 auf das Basismaterial 1 aufgebracht worden ist, erfolgt eine optionale Wärmebehandlung, welche dazu führt, dass sich eine dünne, dichte Aluminiumoxidschicht 5 auf der MCrAlX-Schicht 3 ausbildet. Die Dicke der dichten Aluminiumoxidschicht 5 kann beispielsweise zwischen 10 und 50 µm betragen. Diese dichte Aluminiumoxidschicht 5 dient im fertigen Wärmedämmbeschichtungssystem als Oxidationsbarriere, welche das Basismaterial 1 während des Betriebs der Gasturbine vor Oxidation schützt. Die Turbinenschaufel 120, 130 nach dem erzeugende dichten Aluminiumoxidschicht 5 ist in Figur 6 dargestellt. Die optionale Wärmebehandlung ermöglicht das gezielte Herstellen der dichten Aluminiumoxidschicht 5. Falls dieser optionale Schritt nicht durchgeführt wird, bildet sich eine dichte Aluminiumschicht beim Betrieb der Turbinenschaufel aus.

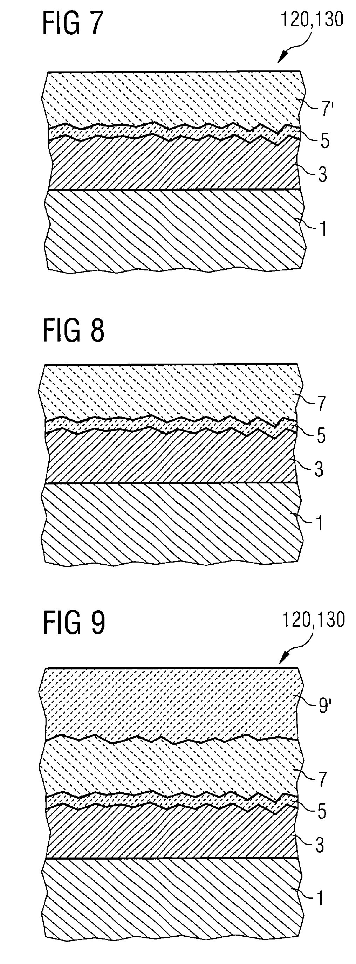

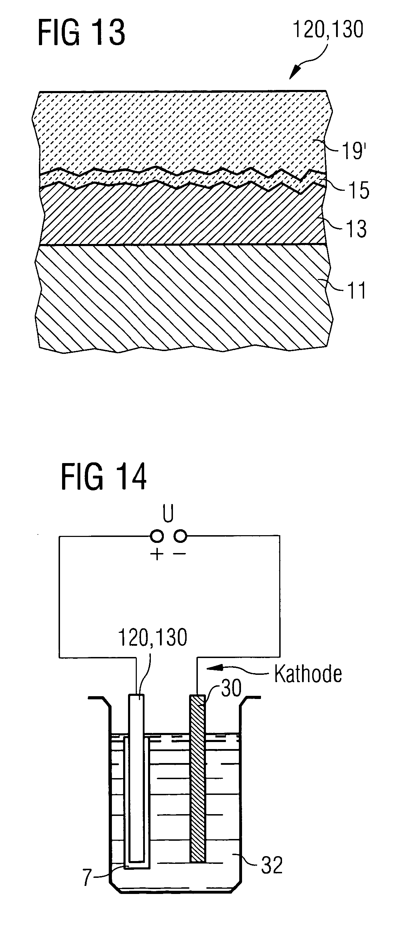

Figur 7 zeigt den nächsten Schritt beim Herstellen des erfindungsgemäßen Wärmedämmbeschichtungssystems. Auf die Aluminiumoxidschicht 5 ist erneut eine MCrA1X-Schicht 7' aufgebracht worden. Auch diese MCrAlX-Schicht 7' wird mittels eines Standardverfahrens aufgebracht, beispielsweise durch Plasmaspritzen. Falls der optionale Schritt der Wärmebehandlung nicht durchgeführt wird, ist die MCrAlX-Schicht 7' aus Figur 7 ein Teil der MCrAlX-Schicht 7. Der Zustand der Turbinenschaufel 120, 130 entspricht dann dem in Figur 5 dargestellten Zustand. Danach wird die Turbinenschaufel 120, 130 in ein elektrolytisches Bad eingebracht. Dies ist schematisch in Figur 14 dargestellt

Neben der Turbinenschaufel 120, 130, die sich im in Figur 7 bzw. im in Figur 5 gezeigten Stadium befindet und die eine Elektrode der Anordnung darstellt, ist im elektrolytischen Bad auch einer Kohleelektrode 30 angeordnet. Als Elektrolyt dient eine Säure 32. Die beiden Elektroden sind mit einer Spannungsquelle so verbunden, dass die Turbinenschaufel 120, 130 die Anode und die Kohleelektrode 30 die Kathode bildet. Bei Anlegen einer Spannung zwischen der Kathode und der Anode oxidiert das Aluminium in der MCrA1X-Schicht 7' bzw. der der MCrAlX-Schicht 7, so dass sich eine Aluminiumoxidschicht bildet. Die Spannung zwischen Kathode und Anode ist hierbei so gewählt, dass die Durchschlagspannung der zu bildenden Aluminiumoxidschicht überschritten ist. Dies führt zu einem elektrischen Entladungsvorgang, der eine plasmachemische Reaktion aktiviert. In Abhängigkeit von den gewählten Prozessparametern weist die so hergestellte Aluminiumoxidschicht unterschiedliche Schichtmorphologien (Porositäten) und/oder unterschiedliche Kristallinitäten auf (teilamorph, nanokristallin). Geeignete Prozessparameter sind hierbei insbesondere die angelegte Spannung sowie die Stromdichte im Bereich der Aluminiumoxidschicht. Mit der Zeit führt die angelegte Spannung dazu, dass sich aus dem Aluminium in der als aluminiumreiches Schichtreservoir dienenden MCrA1X-Schicht bei geeigneten Prozessparametern eine poröse Aluminiumoxidschicht 7 ausbildet. Die Dicke der dabei entstehenden porösen Aluminiumoxidschicht lässt sich durch die Zeitdauer einstellen, über die die Spannung angelegt ist.

Die Turbinenschaufel 120, 130 nach dem elektrolytischen Oxidieren der MCrAlX-Schicht 7' zu der porösen Aluminiumoxidschicht 7 ist in Figur 8 dargestellt.

Abschließend wird die Zirkoniumoxidschicht 9 auf die poröse Aluminiumoxidschicht 7 aufgebracht. Dies kann durch Standardverfahren, beispielsweise durch atmosphärisches Plasmaspritzen oder durch elektronenstrahlunterstützte Abscheidung aus der Dampfphase erfolgen. Insbesondere kann das Aufbringen der Zirkoniumoxidschicht aber auch mittels elektrolytischer Oxidation erfolgen. Hierzu wird ein zirkoniumreiches Schichtreservoir 9' auf die poröse Aluminiumoxidschicht 7 mit einem bekannten Verfahren, beispielsweise durch Plasmaspritzen, aufgebracht (Fig. 9). Danach wird die Turbinenschaufel 120, 130 erneut in eine elektrolytisches Bad mit einer Säure 32 als Elektrolyt und einer Kohleelektrode 30 als Kathode gegeben. Die Turbinenschaufel 120, 130 dient wiederum als Anode. Die Umwandlung des Zirkoniums in dem zirkoniumreichen Schichtreservoir erfolgt dann durch Anlegen einer geeigneten Spannung zwischen Kathode und Anode. Das Einstellen der Schichtmorphologie und der Kristallinität der entstehenden Zirkoniumoxidschicht kann wie bei der porösen Aluminiumoxidschicht 7 durch geeignetes Einstellen der Prozessparameter, insbesondere durch geeignetes Einstellen der Spannung und der Stromdichte im Bereich der Zirkoniumoxidschicht, beeinflusst werden. Nach dem elektrolytischen Oxidieren des zirkoniumreichen Schichtreservoirs 9' der Turbinenschaufel 120, 130 ist die Turbinenschaufel mit dem Erfindungsgemäßen Wärmedämmbeschichtungssystem aus Figur 4 fertig gestellt.

Falls die Zirkoniumoxidschicht 9 mit Yttrium teilweise oder vollständig in ihrer Struktur stabilisiert sein soll, kann dem zirkoniumreichen Schichtreservoir auch Yttrium und/oder Yttriumoxid hinzugefügt sein.

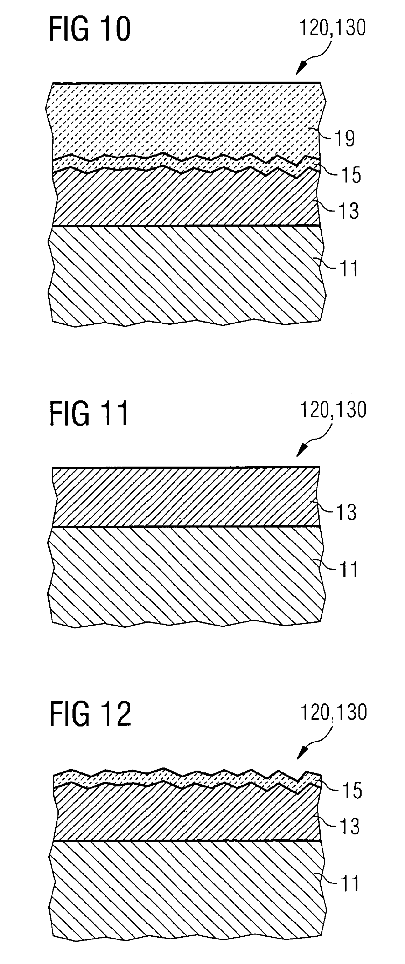

Figur 10 zeigt wiederum am Beispiel einer Turbinenschaufel 120, 130 als Turbinenbauteil ein zweites Beispiel für ein Wärmedämmbeschichtungssystem, das mit dem erfindungsgemäßen Verfahren hergestellt worden ist. Das Wärmedämmbeschichtungssystem aus Figur 6 unterscheidet sich vom Wärmedämmbeschichtungssystem aus Figur 4 im Wesentlichen dadurch, dass keine poröse Aluminiumoxidschicht vorhanden ist. Es umfasst eine auf dem Basismaterial 11 der Turbinenschaufel 120, 130 angeordnete Haftvermittlerschicht 13, beispielsweise eine MCrAlX-Schicht oder PtAl-Schicht, eine auf der Haftvermittlerschicht 13 befindliche dünne, dichte Aluminiumoxidschicht 15 sowie eine direkt auf der dünnen Aluminiumoxidschicht 15 angeordnete oxidkeramische Schicht 19, im vorliegenden Ausführungsbeispiel eine Zirkoniumoxidschicht, die teilweise oder vollständig mit Yttriumoxid stabilisiert sein kann. Die Schichtfolge des im Figur 10 dargestellten Wärmedämmbeschichtungssystems entspricht der aus dem Stand der Technik bekannten Schichtfolge.

In einem ersten Schritt zum Herstellen des in Fig. 10 dargestellten Wärmedämmbeschichtungssystems wird eine MCrAlX-Schicht oder eine PtAl-Schicht als Haftvermittlerschicht 13 auf das Basismaterial 11 aufgebracht. Dies erfolgt mittels eines Standardverfahrens, wie es aus dem Stand der Technik bekannt ist, beispielsweise durch Plasmaspritzen. Die Turbinenschaufel 120, 130 nach dem Aufbringen der Haftvermittlerschicht 13 ist in Figur 11 dargestellt.

Anschließend wird die mit der Haftvermittlerschicht 13 beschichtete Turbinenschaufel 120, 130 einer optionalen Wärmebehandlung unterzogen, die das Aluminium in der Haftvermittlerschicht 13 teilweise in dichtes thermisch gebildetes Aluminiumoxid 15 umwandelt. Die Dicke der thermisch gewachsenen Aluminiumoxidschicht 15 kann bspw. zwischen 10 und 50 µm betragen. Die Turbinenschaufel 120, 130 nach dem Herstellen der dichten Aluminiumoxidschicht 15 ist in Figur 12 dargestellt. Die optionale Wärmebehandlung ermöglicht das gezielte Herstellen der dichten Aluminiumoxidschicht 15. Falls dieser optionale Schritt nicht durchgeführt wird, bildet sich eine dichte Aluminiumschicht 15 beim Betrieb der Turbinenschaufel aus.

In einem nächsten Verfahrensschritt wird auf die dichte Aluminiumoxidschicht 15 bzw. auf die Haftvermittlerschicht 13, wenn keine optionale Wärmebehandlung erfolgt ist, ein metallreiches Schichtreservoir 19' mittels eines Standardverfahrens, beispielsweise durch Plasmaspritzen, aufgebracht. Als metallreiches Schichtreservoir 19' kann grundsätzlich jedes Schichtreservoir Verwendung finden, dessen Metall im oxidierten Zustand eine schlecht wärmeleitende Oxidkeramik bildet. Im vorliegenden Ausführungsbeispiel findet ein zirkoniumreiches Schichtreservoir Anwendung. Falls die zu bildende oxidkeramische Schicht eine Zirkoniumoxidschicht sein soll, die mit Yttriumoxid wenigstens teilweise in ihre Struktur stabilisiert ist, kann dem zirkoniumreichen Schichtreservoir außerdem Yttrium und/oder Yttriumoxid zugesetzt sein. Die Turbinenschaufel 120, 130 nach dem Aufbringen des metallreichen Schichtreservoirs 19' ist in Figur 13 dargestellt.

Die Turbinenschaufel 120, 130 im in Figur 13 dargestellten Zustand mit oder ohne dichter Aluminiumoxidschicht 15 wird anschließend als eine Elektrode zusammen mit einer Kohleelektrode 30 in ein elektrolytisches Bad mit einer Säure 32 als Elektrolyten gegeben. Die Anordnung entspricht der mit Bezug auf Figur 8 beschriebenen Anordnung. Das elektrolytische Oxidieren des Metalls im metallreichen Schichtreservoir 19' erfolgt analog zum Oxidieren des zirkoniumreichen Schichtreservoirs 9' aus Figur 5e.

Nach dem elektrolytischen Oxidieren ist die Turbinenschaufel 120, 130 mit dem in Figur 6 dargestellten Wärmedämmbeschichtungssystem versehen.

Die in den Figuren 4 und 10 dargestellten oxidkeramischen Wärmedämmschichten 9, 19 haben vorzugsweise eine Dicke von bis zu 200 µm. Die elektrolytisch aufgewachsenen oxidkeramischen Wärmedämmschichten weisen gegenüber herkömmlichen, also mittels atmosphärischen Plasmaspritzens (APS) oder mittels elektronenstrahlunterstützten Abscheidens aus der Dampfphase (EP-BVD) aufgebrachten oxidkeramischen Wärmedämmbeschichtungen, eine verbesserte Haftung auf dem Aluminiumoxid auf. Außerdem ermöglicht das erfindungsgemäße Verfahren auf einfache Weise das gezielte Einstellen der Porosität und des Anteils an amorphem Material in den elektrolytisch oxidierten oxidkeramischen Schichten. Das gezielte einstellen der Porosität und der amorphen Materialanteile ermöglicht es, oxidkeramische Schichten mit sehr geringer Wärmeleitfähigkeit herzustellen.

Obwohl das Aufbringen des Wärmedämmbeschichtungssystems am Beispiel von Turbinenschaufeln beschrieben worden ist, versteht es sich von selbst, dass die beschriebenen Wärmedämmbeschichtungssysteme auch auf andere Turbinenbauteile, die im Betrieb einem korrosiven Heißgas ausgesetzt sind, aufgebracht werden kann. Beispiele hierfür sind metallische Auskleidungen von Brennkammern oder von Übergangsstücken zwischen Brennern und der Turbine. Außerdem ist es grundsätzlich möglich, die oxidkeramische Wärmedämmschicht mittels elektrolytischer Oxidation direkt auf das Substrat aufzubringen. Ein solches Wärmedämmbeschichtungssystem weist dann keine Haftvermittlerschicht auf.

## Patentansprüche

1. Verfahren zum Aufbringen eines Wärmedämmbeschichtungssystems mit wenigstens einer oxidkeramischen Beschichtung (7, 9, 19) auf einem Turbinenbauteil (120, 130) oder einer auf dem Turbinenbauteil aufgebrachten Haftvermittlerschicht (3, 12),
**dadurch gekennzeichnet, dass**
die oxidkeramische Beschichtung (7, 9, 19) zumindest teilweise durch elektrolytische Oxidation auf das Turbinenbauteil (120, 130) bzw. die Haftvermittlerschicht (3, 13) aufgebracht wird.

2. Verfahren nach Anspruch 1,
**dadurch gekennzeichnet, dass**
die oxidkeramische Beschichtung (7, 9, 19) aufgebracht wird, indem das Turbinenbauteil (120, 130) bzw. die Haftvermittlerschicht (3, 13) vor dem elektrolytischen Oxidieren mit einem metallischen Schichtreservoir (7', 9', 19') beschichtet wird, dessen Metall beim elektrolytischen Oxidieren oxidiert wird.

3. Verfahren nach Anspruch 2,
**dadurch gekennzeichnet, dass**
das metallische Schichtreservoir Aluminium und/oder Zirkonium umfasst.

4. Verfahren nach einem der Ansprüche 1 bis 3,
**dadurch gekennzeichnet, dass**
die oxidkeramische Beschichtung (7) eine Aluminiumoxidschicht umfasst, die zumindest teilweise durch die elektrolytische Oxidation auf das Turbinenbauteil (120, 130) aufgebracht wird.

5. Verfahren nach Anspruch 4,
**dadurch gekennzeichnet, dass**
die Aluminiumoxidschicht (7) aufgebracht wird, indem das Turbinenbauteil (120, 130) bzw. die Haftvermittlerschicht (3) vor dem elektrolytischen Oxidieren mit einer MCrAlX-Schicht (7') oder einer PtAl-Schicht als einem aluminiumreichem Schichtreservoir beschichtet wird, dessen Aluminium beim elektrolytischen Oxidieren oxidiert wird.

6. Verfahren nach einem der vorangehenden Ansprüche,
**dadurch gekennzeichnet, dass**
das oxidkeramische Wärmedämmbeschichtungssystem wenigstens eine erste oxidkeramische Beschichtung (7) und eine zweite oxidkeramische Beschichtung (9) umfasst und die zweite oxidkeramische Beschichtung (9) durch elektrolytische Oxidation auf die erste oxidkeramische Beschichtung (7) aufgebracht wird.

7. Verfahren nach Anspruch 6,
**dadurch gekennzeichnet, dass**
die zweite oxidkeramische Beschichtung (9) aufgebracht wird, indem die erste oxidkeramische Beschichtung (7) vor dem elektrolytischen Oxidieren mit einem metallischen Schichtreservoir (9') beschichtet wird, dessen Metall beim elektrolytischen Oxidieren oxidiert wird.

8. Verfahren nach Anspruch 7,
**dadurch gekennzeichnet, dass**
das metallische Schichtreservoir (9') für die zweite oxidkeramische Beschichtung (9) Aluminium und/oder Zirkonium umfasst.

9. Verfahren nach einem der Ansprüche 6 bis 8,
**dadurch gekennzeichnet, dass**
sowohl die erste oxidkeramische Beschichtung (7) als auch die zweite oxidkeramische Beschichtung (9) durch elektrolytische Oxidation aufgebracht werden.

10. Verfahren nach einem der vorangehenden Ansprüche,
**dadurch gekennzeichnet, dass**
beim elektrolytischen Oxidieren ein äußeres elektrisches Feld angelegt wird, dessen Feldstärke größer ist als die Durchbruchsspannung der aufzubringenden oxidkeramische Beschichtung.

11. Verfahren nach einem der vorangehenden Ansprüche,
**dadurch gekennzeichnet, dass**
es eine Wärmebehandlung zum Bilden einer dichten Oxidschicht (5, 15) umfasst.

12. Wärmedämmbeschichtungssystem,
welches wenigstens eine erste oxidkeramische Beschichtung (7) und eine zweite oxidkeramische Beschichtung (9) umfasst,
wobei die zweite oxidkeramische Beschichtung (9) auf der ersten oxidkeramische Beschichtung (5, 7) angeordnet ist,
**dadurch gekennzeichnet, dass**
die erste oxidkeramische Beschichtung (7) eine an die zweite oxidkeramische Beschichtung (9) angrenzende poröse Schicht umfasst.

13. Wärmedämmbeschichtungssystem nach Anspruch 12,
**dadurch gekennzeichnet, dass**
die erste oxidkeramische Beschichtung (5, 7) eine dichte Schicht (5) und eine poröse Schicht (7) aufweist und sich die poröse Schicht (7) zwischen der dichten Schicht (5) und der zweiten oxidkeramischen Beschichtung (9) befindet.

14. Wärmedämmbeschichtungssystem nach Anspruch 12 oder 13,
**dadurch gekennzeichnet, dass**
die poröse Schicht (7) eine Schichtdicke im Bereich von 10 µm bis 200 µm aufweist.

15. Wärmedämmbeschichtungssystem nach einem der Ansprüche 12 bis 14,
**dadurch gekennzeichnet, dass**
die erste oxidkeramische Beschichtung (5, 7) eine Aluminiumoxidschicht ist.

16. Wärmedämmbeschichtungssystem nach einem der Ansprüche 12 bis 15,
**dadurch gekennzeichnet, dass**
die zweite oxidkeramische Beschichtung (9) eine Zirkoniumoxidschicht ist.

17. Wärmedämmbeschichtungssystem nach einem der Ansprüche 12 bis 16,
**dadurch gekennzeichnet, dass**
die erste oxidkeramische Beschichtung (5, 7) auf eine Haftvermittlerschicht (3) aufgebracht ist.

18. Turbinenbauteil mit einem Wärmedämmbeschichtungssystem nach einem der Ansprüche 11 bis 17.
